# EUROPEAN PATENT SPECIFICATION

(11) **EP 0 926 876 B1**
(45) Date of publication and mention of the grant of the patent: **09.10.2002**
(21) Application number: 97203937.4
(22) Date of filing: 17.12.1997
(51) Int. Cl.: H04N 1/00

(54) **An image scanner with automatic document feeder**
Bildabtaster mit automatischer Dokumentenzuführung
Scanner avec alimentation automatique de documents

(43) Date of publication of application: 30.06.1999
(73) Proprietor: Microtek International, Inc., Taiwan 300 (TW)
(72) Inventor: Wang, Jin-Dar, Hsinchu (TW)
(74) Representative: Ferguson, Alexander

(56) References cited:
- GB-A- 2 062 547
- GB-A- 2 299 802
- US-A- 4 576 472
- US-A- 4 743 974
- US-A- 4 908 719
- US-A- 5 168 310
- US-A- 5 666 595

## Description

### BACKGROUND OF THE INVENTION

### 1. Field of The Invention

The present invention is related to an image scanner (briefly called a scanner), especially to the scanner with an automatic document feeder (ADF) and single-side/double-side document scanning modes.

### 2. Description of The Related Art

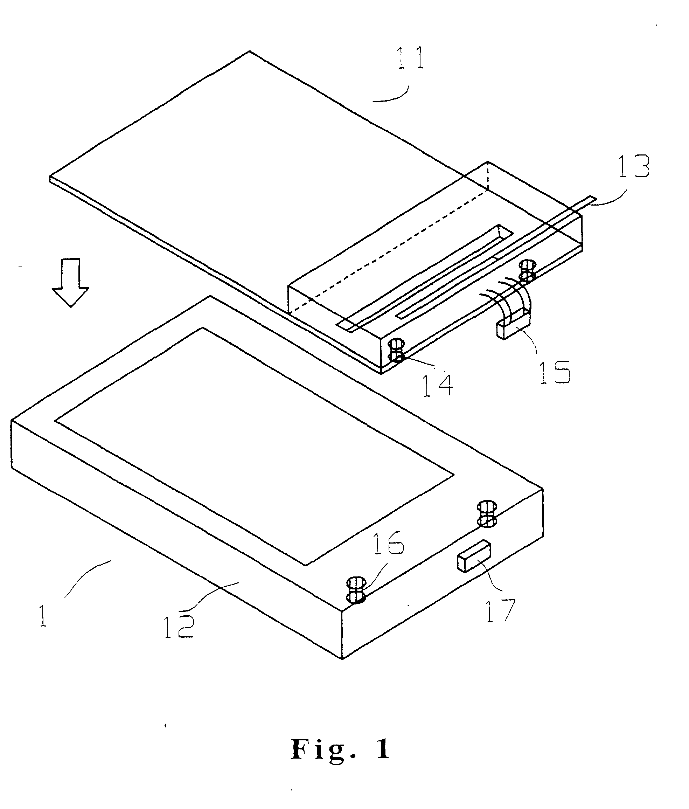

A prior art of a flat-bed scanner 1 with ADF is shown in Fig. 1. The scanner 1 contains an optional automatic document feeder (ADF) 11 and a scanner body 12. The ADF 11 can feed a plurality of document sheets in a document input tray one by one into the scanner body 12. In addition, there exist two fixing posts 14 and an electric connector 15 in the ADF 11, which the fixing posts 14 are plugged into the related plug-in holes 16 to mechanically settle the ADF 11 on the flat bed of the scanner 1, and the electric connector 15 is connected to the other electric connector 17 to communicate with scanner 1.

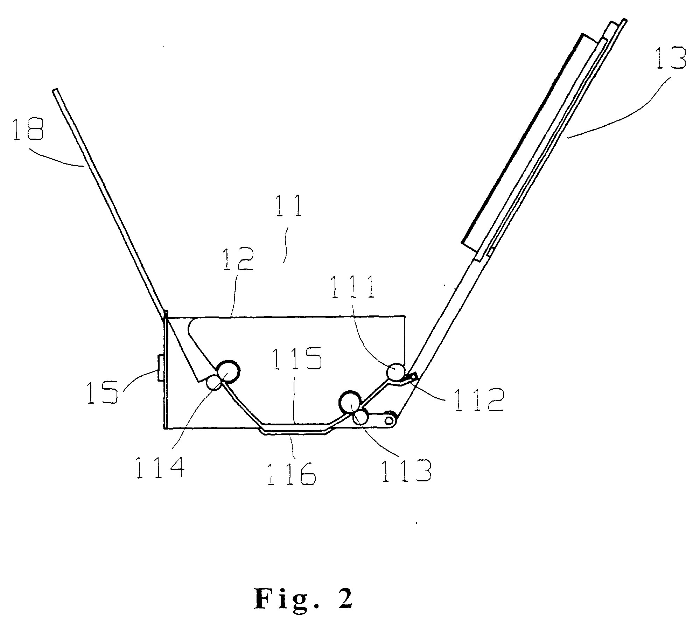

Fig. 2 is the side view of the ADF 11 described above. The stacked plurality of document sheets (not shown in Fig. 1) are put into the document input tray 13 in order. With the cooperation of the document separating roller 111 and the pressing plate 112, the first document sheet on the top is separated with the other document sheets and then is fed into the document sliding channel 115 for scanning, then this document sheet is transported forward into the document output tray 18 by a couple of document enter rollers 113 and a couple of document exit rollers 114. Under the bottom of the document sliding channel 115 in the ADF 11, there is a scanning slit as the document scanning window which is shown in Fig. 2. In order to let a document sheet smoothly pass through the document scanning window and successfully enter the rear section of the document sliding channel 115, there is a transparent guiding slice 116 under the document scanning window in the bottom of the scanner body 12 to connect the front and rear sections of the document sliding channel 115.

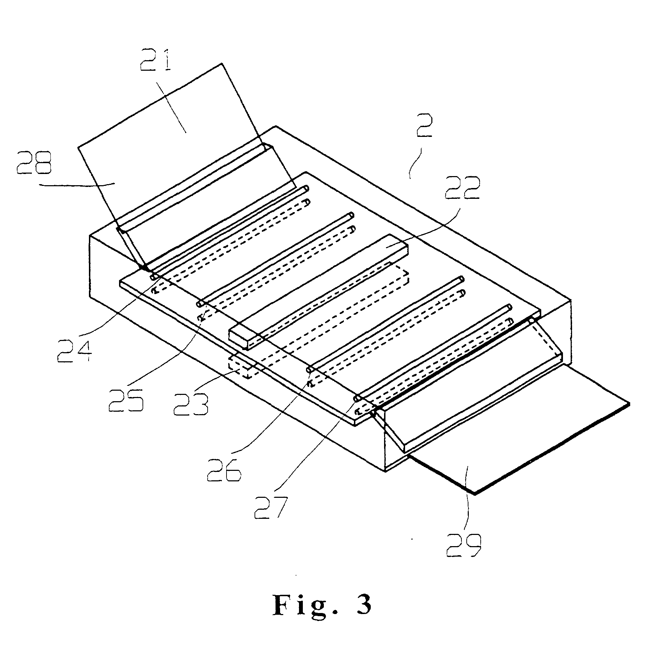

Fig. 3 is the exploded perspective view of a double-side scanner 2 of a prior art. The double-side scanner 2 contains an automatic document feeder (ADF), a upside digital image capture device 22 and a underside digital image capture device 23, which the ADF contains a plurality of document feeding rollers 24, 25, 26, and 27, a document input tray 28 and a document output tray 29. The stacked plurality of document sheets are put in the document input tray 28. With the document separating mechanism, the first document sheet is separated with the other document sheets. Then, the document sheet is transported through the document sliding channel between the upside digital image capture device 22 and the underside digital image capture device 23 by using the document feeding rollers 24, 25, 26, and 27. Consequently, the double sides of the document sheet are scanned. Finally, the document sheet is delivered into the document output tray 29.

US Patent No. 5,168,310, titled "Original image transporting and reading apparatus", discloses an image scanner with automatic document feeder for scanning a document. The image scanner comprises a housing, a transporting path, an automatic document feeding mechanisme for transporting documents to pass documents along the transporting path and and passing a scanning window.

### OBJECTIVE OF THE INVENTION

In the Fig. 1 and 2, since the moving document sheet directly contacts to the transparent guiding slice 116, the transparent guiding slice 116 is easily frayed after used a long duration and its transparency will be consequently reduced. Hence, the image scanning quality will be decayed by the fogged transparent guiding slice 116. Although the transparent guiding slice 116 can be replaced with a new one by users, this action will induce the following problems:
1. the replacing action will result the inconvenience of users;
2. the transparent guiding slice 116 is pasted by a double-side adhesive tape, and hence, caused by the residual adhesive tape, the new transparent guiding slice will not be pasted smoothly or at incorrect location, and it will induce the document feeding hindrance in the ADF 11.

The double-side scanner of the prior art is an all-build-in-one design, i.e., all components of the scanner are built in a machine and they cannot be separated. With the ADF, the upside and underside digital image capture devices, users can scan the double sides of a plurality of documents simultaneously. As the scanner just enables one digital image capture device, it can scan one side of a document sheet. However, since the all-build-in-one design, the double-side scanner cannot be divided as two single-side scanners. This limits the double-side scanner's function.

One objective of the present invention is that a new mechanism of ADF without any transparent guiding slice is introduced. The ADF of the present invention can solve the drawbacks of the prior art by using a document guiding plate for connecting the document sliding channel, which induces the inconvenience of users and the poor scanning quality.

The other objective of the present invention is that the new mechanism of ADF with a scanning module solves the drawback of the double-side scanner of the prior art, whose function is limited by the all-build-in-one design. The scanner with the new ADF of the present invention can be divided as two single-side scanners.

### SUMMARY OF THE INVENTION

The scanner of the present invention comprises a main body with automatic document feeder and image capture device, a base and a flatbed scanner. The automatic document feeder does not need the transparent guiding slice described in the prior art. A sheet-feed scanner can be built up by assembling the main body and a base, and a double-side scanner is formed by assembling the main body and a flat-bed scanner.

### BRIEF DESCRIPTION OF DRAWING

Fig. 1 is the exploded perspective view of a scanner with an automatic document feeder (ADF) of a prior art.
Fig. 2 is the side view of the ADF shown in Fig. 1.
Fig. 3 is the perspective view of a double-side scanner of a prior art.
Fig. 4 is the exploded perspective view of the first preferred embodiment of the present invention.
Fig. 5 is the exploded side view of the first embodiment of the present invention.
Fig. 6 is the side view of an essential part of the first embodiment according to the present invention.
Fig. 7 is the exploded side view of a scanner built on a flat-bed scanner of the present invention.
Fig. 8 is the side view of an essential part of the scanner shown in Fig. 7.
Fig. 9 is the exploded side view of the second embodiment of the present invention.
Fig. 10 is the side view of an essential part of the second embodiment according to the present invention.

### DETAILED DESCRIPTION OF THE PREFERRED EMBODIMENTS

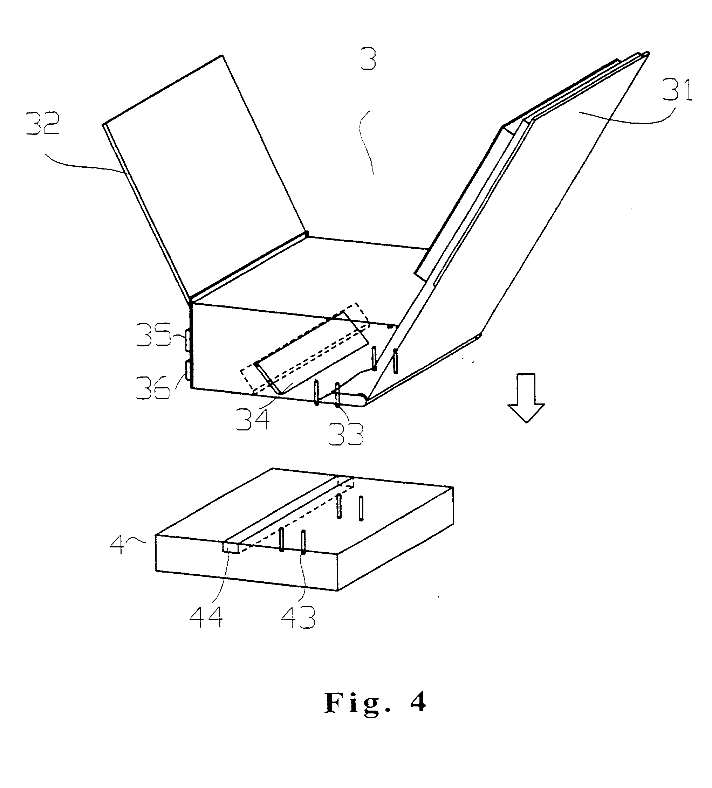

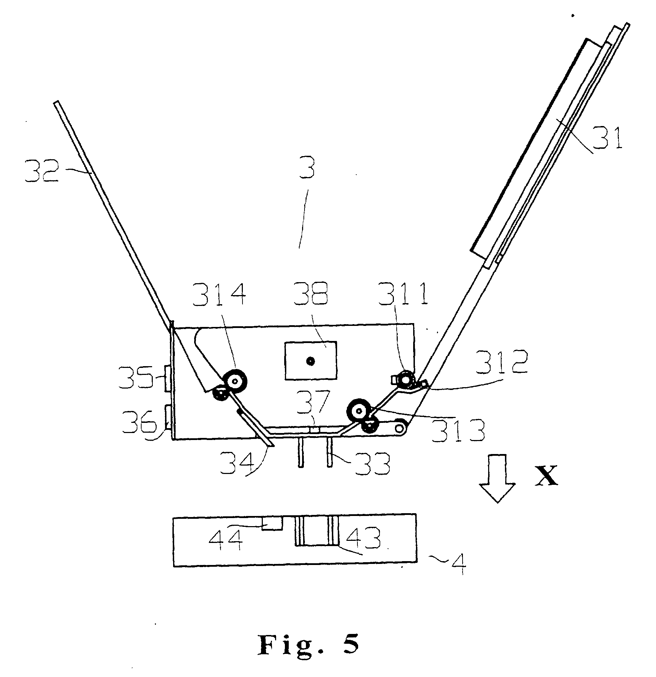

Fig. 4 is the exploded perspective view of a scanner of the present invention. In order to clearly exhibit the characteristic of the present invention, some components of the scanner are not shown. Referred to Fig. 4 and 5, the scanner consists of an main body 3 and a base 4 for settling the main body 3 in the X direction. The main body 3 comprises an input tray for receiving the document to be scanned, an output tray for receiving the document scanned, document feeding mechanism for feeding the document from input tray to output tray through document channel, a digital image capture device (shown in Fig. 5) for capturing the document image passing through the channel, a plurality of posts 33, document guiding plate 34 and connector 35,36. The base 4 has a plate receiving groove 44 at the location related to the document guiding plate 34 and a plurality of plug-in holes 43 at the locations related to the fixing posts 33. The plurality of fixing posts 33 extend down from the main body's bottom surface. The document guiding plate 34 extends from the channel and exposes outside the main body 3 bottom with inclined angle. The posts 33 plug into the plug-in holes 43 for settling the main body 3 on the base 4. The lower part of the document guiding plate 34 inserts into the guide-plate groove 44 with some inclined angle. The power port 35 supports the electric power of the scanner, and the signal port 36 is connected to a personal computer (PC) or a flat-bed scanner. Since the main body 3 has a digital image capture device, it and the base 4 are assembled to form a sheet-feed scanner, which can be used to scan single-side of a document sheet.

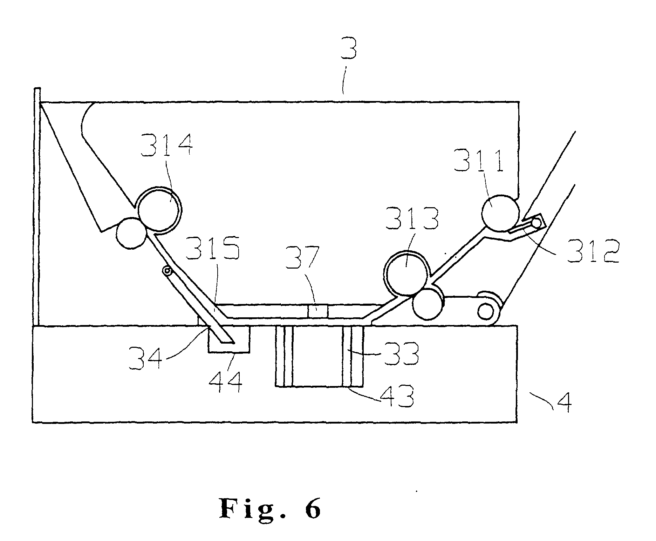

Fig. 5 and 6 describe the operating steps of the scanner of the present invention. First, plug the fixing posts 33 of the main body 3 into the plug-in holes 43 of the base 4, and, at the same time, the document guiding plate 34 is located in the guide-plate groove 44. Then, the scanner is switched to the single-scanner mode as a single image scanning machine, and the signal connecting port 36 is connected to a PC for transferring the control signal and scanning data.

The connecting relation of the main body 3 and the base 4 is described in Fig. 6. The document guiding plate 34 is fixed to the channel of main body with inclined angle. The lower part of the document guiding plate 34, which is exposed outside the main body's bottom surface, inserts into the guide-plate groove 44. There exists an angle between the document guiding plate 34 and the top surface of the base 4, such as 130 degree. Therefore, when the document on the surface of base touches the guiding plate 34, this document will be guided toward the output tray along the guiding plate 34. The document feeding mechanism contains a document separating roller 311, a pressing plate 312, a couple of document enter rollers 313, a couple of document exit rollers 314, a driving motor 38. The driving motor 38 is used to drive separating roller 311, document enter rollers 313, and document exit rollers 314. The top sheet of plurality of document in input tray is separated by separating roller 311 and pressing plate 312, then is fed by enter rollers 313. In the main body 3, there is a document sliding channel 315 from input tray 31 to output tray 32, the front section and rear section. Under the image capture device 37, the channel 315 has an opened section as the scanning window.

Referred to Fig. 5 and 6, the step of separating and feeding a document sheet is illustrated. Some stacked document sheets are put in the document input tray 31, and a document sheet on the top of the stacked document sheets is then separated and fed into the front section of the document sliding channel 315 by the document separating roller 311 and the pressing plate 312. Transported by the document enter rollers 313, the document sheet is continuously fed into the opened section of the document sliding channel 315 and smoothly slides on the top surface of the base 4. The digital image capture device 37 catches the image of the document sheet from the scanning window during the document feeding. Since there exist a inclined angle between the document guiding plate 34 and the top surface of the base 4, when the front edge of the document sheet touches the document guiding plate 34., this document sheet is fed into the rear section of the document sliding channel 315 toward the output tray 32. Then, the document exit rollers 314 deliver the document sheet to the output tray 32, and the single-side image scanning procedure of the scanner in the single-scanner mode is finished.

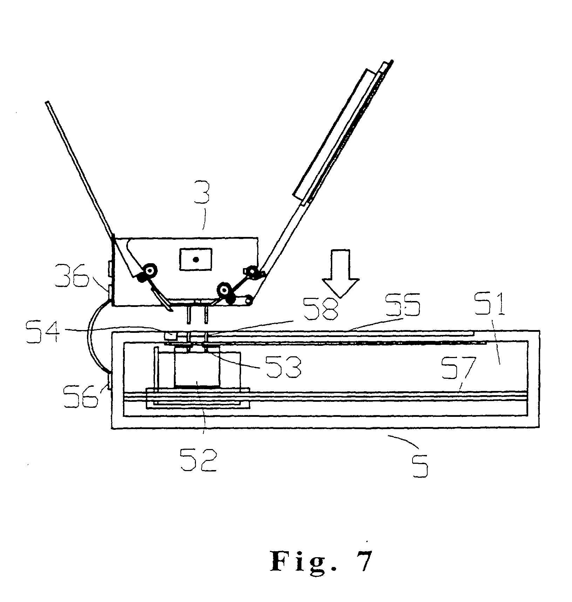

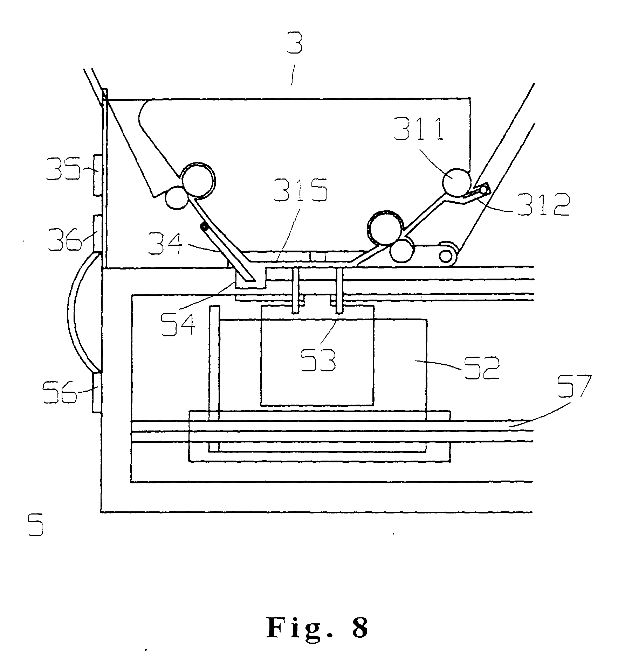

Referred to Fig. 7 and 8, the second preferred embodiment of the present invention is a double-side scanner which can scan both sides of a document sheet simultaneously. The double-side scanner is built up by assembling a main body 3 on a flat-bed scanner 5. The flat-bed scanner is similar to that of the prior art, which contains a scanner's housing 51, a movable carriage 52, a sliding guide 57, and the other components. The differences between the present invention and the prior art are that the scanner 5 future includes holes 58 on the two sides of the top plane 55 of the housing 51 and some plug-in holes 53 on the image-scan carriage 52 at the locations related to the fixing posts 33 of the main body 3. Besides, a guide-plate groove 54 locates near one side of the flat glass of the top plane 55, which is used to receiving the document guiding plate 34 of the main body 3 (as shown in Fig. 8). Because the main body 3 and the flat-bed scanner 5 have their own digital image capture devices respectively, the double sides of a document sheet fed by main body 3 can be scanned simultaneously.

When users want to scan the double sides of documents simultaneously, he can settle the main body 3 on the flatbed scanner 5 by inserting the posts 33 of the main body 3 into the plug-in holes 53 of the image-scan carriage 52 through the opened holes 58 on the top plane 55. At the same time, the document guiding plate 34 is inserted into the guide-plate groove 54 of the top plane 55 with an inclined angle. The main body 3 is then switched to the two-scanner mode as a scanning machine with two scanners, and the signal connecting port 36 of the main body 3 is connected to the signal connecting port 56 of the flat-bed scanner 5 for transferring the control signal and scanning data. Since the main body 3 is directly built on the carriage 52 of the flat-bed scanner 5, the scanning window of the main body 3 is straight aligned with the digital image capture device's window on the carriage 52 of the flat-bed scanner 5 (as shown in Fig. 8).

Referred to Fig. 7 and 8, the step of separating and feeding a document sheet is illustrated. Some stacked document sheets are put in the document input tray 31, and a document sheet on the top of the stacked document sheets is then separated and fed into the front section of the document sliding channel 315 by the document separating roller 311 and the pressing plate 312. Transported by the document enter rollers 313, the document sheet is continuously fed into the opened section of the document sliding channel 315 and smoothly slides on the top plane 55 of the flat-bed scanner 5. During the document moving on the top plane 55, the image capture device 37 of the main body 3 and the digital image capture device of the carriage 52 catch the double-sides image of this document sheet. Since there exist angle between the document guiding plate 34 and the top plane 55 of the flat-bed scanner 5, when the front edge of the document sheet touches the document guiding plate 34, this document is guided by the guiding plate 34 and moved toward the output tray 32. Then, the document exit rollers 314 deliver the document sheet to the output tray 32, and the double-side image scanning procedure of the scanner in the two-scanner mode is finished.

In addition, if the main body 3 does not have image capture device, it can also be used as a ADF of the flat-bed scanner 5 without any scanning function. The operating steps of this scanner are the same as those of the double-side scanner shown above, but it scans only one side of documents.

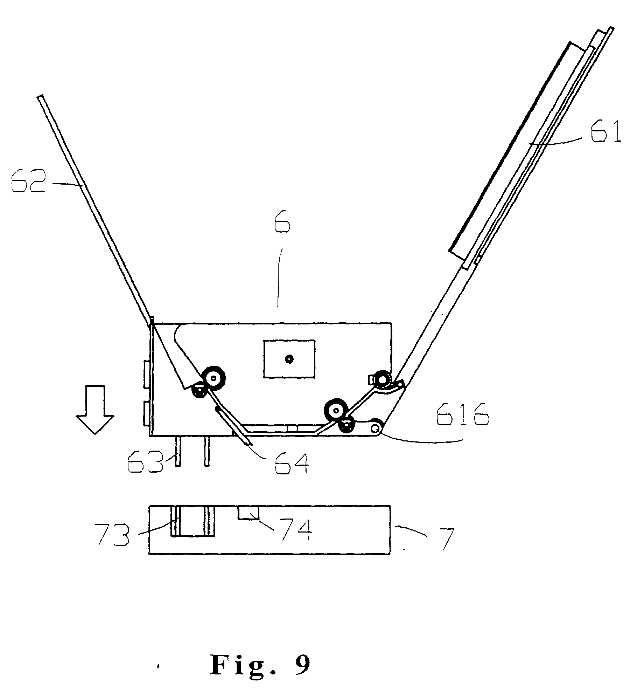

Fig. 9 is a side view of a preferred embodiment of the present invention. In Fig. 9, the components of the main body 6 are the same as those of the main body 3 shown in Fig. 5. The difference is that the locations of the posts 63 are between the document guiding plate 64 and the signal connecting port. The components of the base 7 in Fig. 9 are similar to those of the base 4 in Fig. 5. The difference is that the related location of the plug-in holes 73 and the guide-plate groove 74 is changed. In the single-scanner mode of the present embodiment, the set-up, feeding, and scanning steps are the same as those of the embodiment shown in Fig. 4, and it does not need to describe again.

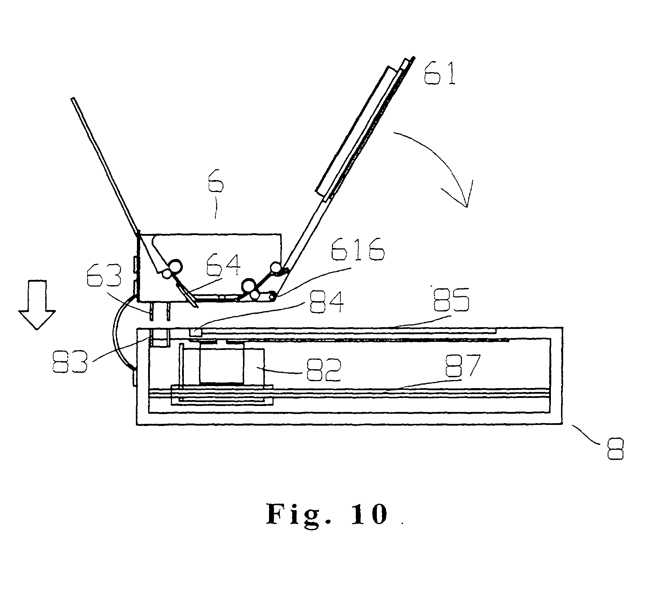

Fig. 10 is also a side view of a preferred embodiment of the present invention. The present embodiment is set up by putting the main body 6 in Fig. 9 on a flat-bed scanner 8 in Fig. 10, and it possesses the function to scanning one side or two sides of documents. The set-up, feeding, and scanning steps are the same as those of the embodiment shown in Fig. 7, and it does not need to describe again. The differences are that, in Fig. 10, the posts 63 of the main body 6 insert into the plug-in holes 83 on one side of the top plane 85 but not the movable carriage 82, and there exists a rotative axis 616 of the document input tray 61. The locations of the plug-in holes 83 are the same as the scanner shown in Fig. 1, which these locations are at one side of the flat-bed scanner 8 in Fig. 10. The posts 63 do not be inserted into the carriage 82, hence, the carriage 82 can be moved at the sliding guide 87. For scanning a document sheet, the scanning quality of a flat-bed scanner is better than a sheet-feed scanner. Therefore, without taking off the main body 6, the present embodiment can be used as a conventional flat-bed scanner by putting a document sheet on the top plane 85 of the flat-bed scanner 8 and then putting down the document input tray 61 in the clockwise direction with the axis 616.

### EFFECT OF THE INVENTION

The scanner of the present invention consists of an main body with a digital image capture device and automatic document feeder, a base, and a flat-bed scanner with own image capture. It can be used as a double-side scanner or divided as two single-side scanners, one is sheet feed scanner and another is flatbed scanner. Hence, the scanner of the present invention can change the single-side and double-side scanning modes to each other, automatically feed documents, and be used as a flat-bed scanner. In addition, since there is no transparent guiding slice used in the automatic document feeder of the scanner, the drawbacks induced by using the transparent guiding slice are improved.

## Claims

1. An image scanner with automatic document feeder for scanning a document, which scanner comprising:
a housing (3) having a document sliding channel (315) and forming a scanning window at said channel (315);
an automatic document feeding mechanism (311, 312, 313,314,38) located in said housing (3) for automatically feeding a plurality of documents to pass through said channel (315) and scanning window one by one;
an image reading device (37) located above said scanning window for reading the document image passing through said scanning window;
a plurality of posts (33) extending from the bottom of said housing (3); **characterized by**
a guiding plate (34) located on the housing in said channel (315) with an inclined angle for guiding said document within the document sliding channel (315) smoothly;
said guiding plate (34) extending beyond the bottom of the housing (3);
a base (4) for placing said housing (3) thereon and having plug-in holes (43) for receiving said posts (33) and a groove (44) for receiving said guiding plate (34);
said housing (3) being assembled with said base (4) by plugging said posts (33) into the corresponding plug-in holes (43) in the base (4) and with said guiding plate (34) extending into said groove (44).

2. The image scanner as claimed in claim 1, wherein said automatic document feeding mechanism comprises a driving motor (38), document separating rollers (311), a document separating plate (312), document input tray (31) and output tray (32) for feeding said document in input tray (31) to output tray (32) through sliding channel (315).

3. An image scanner with automatic document feeder for scanning a document, which scanner comprising:
a housing (6) having a document sliding channel and forming a scanning window at said channel;
an automatic document feeding mechanism located in said housing (6) for automatically feeding a plurality of documents to pass through said channel and scanning window one by one;
a plurality of posts (63) extending from the bottom of said housing (6); **characterized by**
a guiding plate (64) located on the housing in said channel with an inclined angle for guiding said document within the document sliding channel smoothly;
said guiding plate (64) extending beyond the bottom of the housing (6);
a flatbed scanner (8) for placing said housing (6) thereon and having plug-in holes (83) respective to posts (63) for receiving said posts (63) and a groove (84) for receiving said guiding plate (64);
said housing (6) being assembled with said flatbed scanner (8) by plugging said posts (63) into the corresponding plug-in holes (83) of said flatbed scanner (8) and with said guiding plate (64) extending into said groove (84) at an inclined angle.

4. The image scanner as claimed in claim 3, wherein said automatic document feeding mechanism comprises a driving motor, document separating rollers, a document separating plate, document input tray (61) and output tray (62) for feeding said document in input tray to output tray through sliding channel.

5. An image scanner with automatic document feeder for scanning double-side document simultaneously, which scanner comprising:
a housing (3) having a document sliding channel (315) and forming a scanning window at said channel (315);
an automatic document feeding mechanism (311, 312) located in said housing (3) for automatically feeding a plurality of documents to pass through said channel (315) and scanning window one by one;
an image reading device located above said scanning window for reading the document image passing through said scanning window;
a plurality of posts (33) extending from the bottom of said housing (3); **characterized by**
a guiding plate (34) located on the housing in said channel (315) with an inclined angle for guiding said document within the document sliding channel (315) smoothly;
said guiding plate (34) extending beyond the bottom of the housing (3);
a flatbed scanner (5) for placing said housing (3) thereon and having plug-in holes (53, 58) for receiving said posts (33) and a groove (54) for receiving said guiding plate (34);
said housing (3) being assembled with said flatbed scanner (5) by plugging said posts (33) into the corresponding plug-in holes (53, 58) of said flatbed scanner (5) and with said guiding plate (34) extending into said groove (54) at an inclined angle, thereby said scanner can scan double-side document simultaneously.

6. The image scanner as claimed in claim 5, wherein said automatic document feeding mechanism comprises a driving motor (38), document separating rollers (311), a document separating plate (312), document input tray (31) and output tray (32) for feeding said document in input tray (31) to output tray (32) through sliding channel (315).

## Patentansprüche

1. Bildscanner mit automatischem Dokumentvorschub zum Scannen eines Dokumentes, welcher Scanner umfaßt:
ein Gehäuse (3) mit einem Dokumentgleitkanal (315), das ein Scannerfenster auf dem Kanal (315) bildet;
einen in dem Gehäuse (3) angeordneten automatischen Dokumentvorschubmechanismus (311, 312, 313, 314, 38) zum automatisch Zuführen von Dokumenten um eins nach dem anderen durch den Kanal (315) und das Scannerfenster zu führen;
eine über dem Scannerfenster angeordnete Bildlesevorrichtung (37) zum Lesen des durch das Scannerfenster gehenden Dokumentbildes;
eine Mehrheit von von dem Boden des Gehäuses (3) reichenden Ständern (33); **gekennzeichnet durch**
eine auf dem Gehäuse in dem Kanal (315) angeordnete Führungsplatte (34), mit einem schräg abfallenden Winkel um das Dokument reibungslos innerhalb des Dokumentgleitkanals (315) zu führen;
wobei die Führungsplatte (34) unter den Boden des Gehäuses (3) hinaus reicht;
eine Basis (4) um das Gehäuse (3) darauf zu stellen mit steckbaren Löchern (43) zum Aufnehmen der Ständer und einer Rille (44) zum Aufnehmen der Führungsplatte (34);
wobei das Gehäuse (3) mit der Basis (4) assembliert ist **durch** die Ständer (33) in der Basis (4) in die übereinstimmenden steckbaren Löcher (43) zu stecken und wobei die Führungsplatte (34) in die Rille (44) reicht.

2. Bildscanner nach Anspruch 1, wobei der automatische Dokumentvorschubmechanismus einen Antriebsmotor (38), Dokumenttrennungsrollen (311), eine Dokumenttrennungsplatte (312), Dokumenteingabefach (31) und Ausgabefach (32) zum Führen des Dokumentes in dem Eingabefach (31) zu dem Ausgabefach (32) durch den Gleitkanal (315), umfaßt.

3. Bildscanner mit automatischem Dokumentvorschub zum Scannen eines Dokumentes, welcher Scanner umfaßt:
ein Gehäuse (6) mit einem Dokumentgleitkanal, das ein Scannerfenster auf dem Kanal bildet;
einen in dem Gehäuse angeordneten automatischen Dokumentvorschubmechanismus zum automatisch Zuführen von Dokumenten um eins nach dem anderen durch den Kanal und das Scannerfenster zu führen;
eine Mehrheit von von dem Boden des Gehäuses (6) reichenden Ständern (63); **gekennzeichnet durch**
eine auf dem Gehäuse in dem Kanal angeordnete Führungsplatte (64), mit einem schräg abfallenden Winkel um das Dokument reibungslos innerhalb des Dokumentgleitkanals zu führen;
wobei die Führungsplatte (64) unter den Boden des Gehäuses (6) hinaus reicht;
ein Flachbettscanner (8) um das Gehäuse (6) darauf zu stellen mit steckbaren Löchern (83) für Ständer (63) zum Aufnehmen der Ständer (63) und einer Rille (84) zum Aufnehmen der Führungsplatte (64);
wobei das Gehäuse (6) mit dem Flachbettscanner (8) assembliert ist **durch** die Ständer (63) in die übereinstimmenden steckbaren Löcher (83) des Flachbettscanners (8) zu stecken und wobei die Führungsplatte (64) auf einem schräg abfallenden Winkel in die Rille (84) reicht.

4. Bildscanner nach Anspruch 3, wobei der automatische Dokumentvorschubmechanismus einen Antriebsmotor, Dokumenttrennungsrollen, eine Dokumenttrennungsplatte, Dokumenteingabefach (61) und Ausgabefach (62) zum Führen des Dokumentes in dem Eingabefach zu dem Ausgabefach durch den Gleitkanal, umfaßt.

5. Bildscanner mit automatischem Dokumentvorschub zum gleichzeitig Scannen von zweiseitigen Dokumenten, welcher Scanner umfaßt:
ein Gehäuse (3) mit einem Dokumentgleitkanal (315), das ein Scannerfenster auf dem Kanal (315) bildet;
einen in dem Gehäuse angeordneten automatischen Dokumentvorschubmechanismus (311, 312) zum automatisch Führen von Dokumenten durch den Kanal (315) und zum Scannen des Fensters eins nach dem anderen;
Bildlesevorrichtung über dem Scannerfenster angeordnet zum Lesen des Dokumentbildes das durch das Scannerfenster geht;
eine Mehrheit von von dem Boden des Gehäuses (3) reichenden Ständern (33); **gekennzeichnet durch**
eine auf dem Gehäuse in dem Kanal (315) angeordnete Führungsplatte (34) mit einem schräg abfallenden Winkel um das Dokument reibungslos innerhalb des Dokumentgleitkanals (315) zu führen;
wobei die Führungsplatte (34) unter den Boden des Gehäuses (3) hinaus reicht;
einen Flachbettscanner (5) um das Gehäuse (3) darauf zu stellen und mit steckbaren Löchern (53, 58) zum Aufnehmen der Ständer (33) und einer Rille (54) zum Aufnehmen der Führungsplatte (34);
wobei das Gehäuse (3) mit dem Flachbettscanner (5) **durch** die Ständer (33) in die übereinstimmenden steckbaren Löcher (53, 58) des Flachbettscanners (5) zu stecken, assembliert wird und wobei die Führungsplatte (34) auf einem schräg abfallenden Winkel in die Rille (54) reicht, wobei der Scanner zweiseitige Dokumente gleichzeitig scannen kann.

6. Bildscanner nach Anspruch 5, wobei der automatische Dokumentvorschubmechanismus einen Antriebsmotor (38), Dokumenttrennungsrollen (311), eine Dokumenttrennungsplatte (312), Dokumenteingabefach (31) und Ausgabefach (32) zum Führen des Dokumentes in dem Eingabefach (31) zu dem Ausgabefach (32) durch den Gleitkanal (315), umfaßt.

## Revendications

1. Scanner d'images avec dispositif d'alimentation automatique de documents pour scanner un document, cet scanner comprenant :
un boîtier (3) ayant un canal de glissement de document (315) et formant une fenêtre de scannage au niveau dudit canal (315) ;
un mécanisme d'alimentation automatique de documents (311, 312, 313, 314, 38) placé dans ledit boîtier (3) pour alimenter automatiquement une pluralité de documents et les faire traverser un par un ledit canal (315) et ladite fenêtre de scannage ;
un appareil de lecture d'image (37) placé au-dessus de ladite fenêtre de scannage pour lire l'image portée par le document traversant ladite fenêtre de scannage :
une pluralité de montants (33) partant du bas dudit boîtier (3) ;
**caractérisé par** une plaque de guidage (34) placée sur le boîtier dans ledit canal (315) avec un angle incliné pour guider en douceur ledit document à l'intérieur du canal de glissement de document (315) ;
ladite plaque de guidage (34) dépassant du bas du boîtier (3) ;
une base (4) pour y placer ledit boîtier (3) et ayant des trous d'insertion (43) pour recevoir lesdits montants (33) et une rainure (44) pour recevoir ladite plaque de guidage (34) ;
ledit boîtier (3) étant assemblé avec ladite base (4) en insérant lesdits montants (33) dans les trous d'insertion correspondants (43) dans la base (4) et avec ladite plaque de guidage (34) continuant dans ladite rainure (44).

2. Scanner d'images selon la revendication 1, dans lequel ledit mécanisme d'alimentation automatique de documents comprend un moteur d'entraînement (38), des rouleaux de séparation de documents (311), une plaque de séparation de documents (312), un plateau d'entrée (31), et un plateau de sortie (32) de document pour alimenter ledit document du plateau d'entrée (31) vers le plateau de sortie (32) à travers ledit canal de glissement (315).

3. Scanner d'images avec dispositif d'alimentation automatique de documents pour scanner un document, cet scanner comprenant :
un boîtier (6) ayant un canal de glissement de document et formant une fenêtre de scannage au niveau dudit canal ;
un mécanisme d'alimentation automatique de documents placé dans ledit boîtier (6) pour alimenter automatiquement une pluralité de documents et
les faire traverser un par un ledit canal (315) et ladite fenêtre de scannage ;
une pluralité de montants (63) partant du bas dudit boîtier (6) ;
**caractérisé par** une plaque de guidage (64) placée sur le boîtier dans ledit canal avec un angle incliné pour guider en douceur ledit document à l'intérieur du canal de glissement de document ;
ladite plaque de guidage (64) dépassant du bas du boîtier (6) ;
un scanner à plat (8) pour y placer ledit boîtier (6) et doté de trous d'insertion (83) correspondant pour recevoir lesdits montants (63) et d'une rainure (84) pour recevoir ladite plaque de guidage (64) ;
ledit boîtier (6) étant assemblé avec ledit scanner à plat (8) en insérant lesdits montants (63) dans les trous d'insertion correspondants (83) dudit scanner à plat et avec ladite plaque de guidage (64) continuant dans ladite rainure (84) avec un angle incliné.

4. Scanner d'images selon la revendication 3, dans lequel ledit mécanisme d'alimentation automatique de documents comprend un moteur d'entraînement, des rouleaux de séparation de documents, une plaque de séparation de documents, un plateau d'entrée (61) de document, et un plateau de sortie (62) pour alimenter ledit document du plateau d'entrée (61) vers le plateau de sortie (62) à travers ledit canal de glissement .

5. Scanner d'images avec dispositif d'alimentation automatique de documents pour scanner simultanément un document double face, cet scanner comprenant :
un boîtier (3) ayant un canal de glissement de document (315) et formant une fenêtre de scannage au niveau dudit canal (315) ;
un mécanisme d'alimentation automatique de documents (311, 312) placé dans ledit boîtier (3) pour alimenter automatiquement une pluralité de documents et les faire traverser un par un ledit canal (315) et ladite fenêtre de scannage ;
un appareil de lecture d'image placé au-dessus de ladite fenêtre de scannage pour lire l'image portée par le document traversant ladite fenêtre de scannage :
une pluralité de montants (33) partant du bas dudit boîtier (3) ;
**caractérisé par** une plaque de guidage (34) placée sur le boîtier dans ledit canal (315) avec un angle incliné pour guider en douceur ledit document à l'intérieur du canal de glissement de document (315) ;
ladite plaque de guidage (34) dépassant du bas du boîtier (3) ;
un scanner à plat (5) pour y placer ledit boîtier (3) et doté de trous d'insertion (53, 58) pour recevoir lesdits montants (33) et d'une rainure (54) pour recevoir ladite plaque de guidage (34) ;
ledit boîtier (3) étant assemblé avec ledit scanner à plat (5) en insérant lesdits montants (33) dans les trous d'insertion correspondants (53, 58) dudit scanner à plat (5) et avec ladite plaque de guidage (34) continuant dans ladite rainure (54) à un angle incliné, ce qui fait que ledit scanner peut scanner simultanément le document double face.

6. Scanner d'images selon la revendication 5, dans lequel ledit mécanisme d'alimentation automatique de documents comprend un moteur d'entraînement (38), des rouleaux de séparation de documents (311), une plaque de séparation de documents (312), un plateau d'entrée de document (31), et un plateau de sortie (32) pour alimenter ledit document du plateau d'entrée (31) vers le plateau de sortie (32) à travers ledit canal de glissement (315).
